# EUROPEAN PATENT APPLICATION

(11) **EP 2 693 172 A1**
(43) Date of publication of application: **05.02.2014**
(21) Application number: 13001861.7
(22) Date of filing: 10.04.2013
(51) Int. Cl.: G01F 1/684

(54) **Flow sensor**

(71) Applicant: Sensirion AG, 8712 Stäfa (CH)
(72) Inventor: Mayer, Felix, 8712 Stäfa (CH); Von Waldkirch, Marc, 8053 Zürich (CH); Hornung, Mark, 8712 Stäfa (CH)
(74) Representative: Toleti, Martin

(57) **Abstract**

A flow sensor is provided comprising a sensor chip. The sensor chip (1) comprises a substrate (11) with a front side (12) and a back side (13), a sensing element (14) arranged at the front side (12) for measuring the flow of a fluid, circuitry (15) arranged at the front side (12) and connected to the sensing element (14), contact pads (192) arranged at the back side (13), and one or more vias (17) extending through the substrate (11) for electrically connecting the circuitry (15) to the contact pads (192).

## Description

### Technical Field

The present invention relates to a flow sensor comprising a sensor chip and to a method for manufacturing a flow sensor.

### Background Art

Today, sensors may be embodied as sensor chips wherein a sensing element e.g. in form of a MEMS structure is applied to a front side of a substrate. The substrate may be a semiconductor substrate and may carry contact pads at the very same front side. This sensor chip may be arranged on a carrier and be electrically connected thereto by means of wire bonds between the contact pads at the front side of the sensor chip and contact pads of the carrier. The wire bonds typically are protected by a mould or a glob top extending around the sensing element such that the sensing element may be arranged in kind of a cavity. The mould or glob top may not only enclose the sensor chip except for the sensing element but also parts of the carrier for stability purposes.

However, in case the sensing element is an element for measuring the flow of a fluid, the fluid is to be directed across the sensing element or at least nearby such that the flow of the fluid can activate the sensing element. This means, that a channel for guiding the fluid is to be arranged in close proximity to the sensing element. However, the mould or glob top - or in case no mould or glob top is provided the wire bonds themselves - may impact the measurement of the flow given that all these elements protrude from the level of the sensing element and as a result extend into the channel. These protrusions may consequently impact the flow of the fluid and specifically may cause turbulences at the location of measurement. Any such turbulence may lead to a deviation in the flow measured from the real flow.

### Disclosure of the Invention

The problem to be solved by the present invention is therefore to provide a flow sensor designed to prevent causing turbulences at the measurement location.

This problem is solved by a flow sensor comprising a sensor chip according to the features of claim 1. The sensor chip comprises a substrate with a front side and a back side. Front and back side typically refer to opposite planes of the substrate, wherein in most instances the dimensions defining the front and back side i.e. the length and the width of the substrate exceed the height of the substrate. The substrate may preferably be a semiconductor substrate, and specifically a silicon substrate, however, in other embodiments the substrate may be a glass or a ceramic substrate. A sensing element is arranged at the front side of the substrate for measuring the flow of a fluid. The fluid may be a gas or a liquid. The sensing element may in one example comprise a thermo-electric transducer arrangement with a heater followed by a thermal sensor in flow direction of the fluid. In this preferred embodiment, the heater supplies heat to the fluid while passing the sensing element. A temperature sensed at the thermal sensor then may be taken as a measure of the flow of the fluid. In another embodiment, another thermal sensor may be arranged upstream of the heater and a difference between the temperatures measured upstream and downstream of the heater may be taken as a measure for the flow of the fluid. However, other approaches may be feasible for sensing the flow of the fluid.

Circuitry is arranged at the front side of the substrate for providing an electrical connection to the sensing element. Contact pads for providing an electrical connection to the sensor chip from the outside are arranged at the back side of the substrate. One or more vias extend through the substrate between the front side and the back side for electrically connecting the circuitry on the front side to the contact pads on the back side. Hence, the one or more vias extend vertically through the substrate between its front and back side. The vias represent an electrically conducting path through the substrate. Preferably, through holes in the substrate that may be manufactured by etching or laser drilling, for example, are filled with a conductive material such as aluminium. In one embodiment, a through hole for a via may completely be filled by the conductive material while in another embodiment only the walls of the through hole may be covered by the conductive material. The back side of the substrate may be provided with an electrically conductive pattern, also referred to as redistribution layer, which pattern preferably may electrically connect a via with an associate contact pad. Given that vias may be formed at defined locations of the sensor chip and that the contact pads may be arranged at different locations subject to the application or subject to the client, the redistribution layer assumes the task of providing variability in the interface pattern to the outside world. The electrically conductive pattern at the back side of the sensor chip may, except for the contact pads, be covered by a lacquer or other protection means. Conductive means may be applied to the contact pads such as a conductive paste or solder balls.

The circuitry at the front side of the substrate may in a preferred embodiment comprise an electronic circuitry for processing a signal of the flow sensor and for supplying a processed signal to the one or more of the vias. The electronic circuitry may preferably be integrated into the substrate by means of known processes such as a CMOS process. Any wiring layer of the CMOS process may be used for connecting the sensing element to processing means of the electronic circuitry. The processing means of the electronic circuitry may then be connected to the vias for supplying the processed sensor signal to the outside world.

In a preferred embodiment, the sensor chip is arranged on a carrier such as a leadframe of a printed circuit board (PCB) wherein the contact pads of the sensor chip are connected to contact pads of the carrier by means of the solder balls, for example. In view of the vias through the sensor chip, bond wires are no longer required for connecting the sensor chip to the carrier. Hence, there is no need for any structure protruding from the level of the sensing element, such as a glop top or a mould or wire bonds, which improves the flow at the measurement location. Preferably, the top surface of the sensor chip is essentially flat wherein small scale protrusions stemming from the sensing element, for example, shall be allowed.

In a preferred embodiment, the entire top surface of the sensor chip with the sensing element can now be exposed to the fluid for the reason that structures impacting the flow of the fluid are absent. This may lead to a preferred arrangement in which the flow sensor comprises the sensor chip embedded in a wall of a channel such that only its top surface is exposed to the fluid and such that this top surface and an inner surface of this wall build an essentially flat surface which is desirable for a uniform flow of the fluid at the measurement location. In such embodiment, it is even avoided that edges of the sensor chip itself may cause undesired turbulences in the fluid.

For this embodiment, but also for other arrangements it is preferred that the sensor chip comprises a passivation layer contributing to a top surface of the sensor chip at its front side which passivation layer is inert to the fluid to pass. While in a sensor chip of the state of the art, its top surface is covered by a mould or a glop top except for the sensing element such that the circuitry is protected by the mould, it is now preferred to apply a passivation layer for protecting the circuitry from any impact the fluid may have. Preferably, the passivation layer extends over the entire top surface of the sensor chip and covers the circuitry and specifically the electronic circuitry of the sensor chip, and, in a preferred embodiment, the sensing element, too. Preferably, the passivation layer comprises or is made from one of silicon oxide and silicon nitride. Preferably, the passivation layer is not only inert to the fluid to be envisaged for passing the sensor chip, but may be repellent to any fluid in general, and specifically may be repellent to water and / or be repellent to dirt. In case the sensor chip is produced from a wafer for producing multiple sensor chips from it is preferred that the following steps are applied on a wafer level, i.e. applied to the entire wafer before separating the wafer into the individual sensor elements: Integrating the sensing element; integrating the circuitry; applying the passivation layer; forming the vias and the redistribution layer.

In a preferred embodiment, a structure is mechanically linked to the sensor chip which structure may at least partially define a channel that guides the fluid across the sensing element or nearby the sensing element. For this purpose, it may be preferred that the flow sensor provides a cap substrate that is attached to the front side of the sensor chip, e.g. bonded thereto. The cap substrate may be one of a semiconductor substrate such as a silicon substrate, a glass substrate and a ceramic substrate, for example. The cap substrate may help defining a channel for guiding the fluid. In a preferred embodiment, a recess is provided in a bottom of the cap substrate which bottom is shall be the side facing the top surface of the sensor substrate after being attached thereto. Such recess may, in combination with the top surface of the sensor substrate build the channel. Preferably, the recess is arranged such that the sensor element faces the recess for having the fluid flow across the sensing element after the cap substrate is attached to the sensor substrate. In a preferred embodiment, the channel built from the recess leaves the cap substrate at two of its sides. In case the recess runs straight in the bottom of the cap substrate, the associate channel leaves the cap substrate at opposite sides. This embodiment is easy to manufacture given that it is only a recess that needs to be fabricated into the cap substrate. It may be preferred that pipes supplying or receiving the fluid connect to the ends of the channel in the flow sensor.

In another embodiment, the channel comprises a through hole in the cap substrate connected to a channel portion formed by a recess in the bottom of the cap substrate. The through hole in the cap substrate extends from a top of the cap substrate to the bottom thereby meeting the recess in the bottom of the cap substrate. In this embodiment, the fluid may be supplied to the top of the cap substrate, e.g. by a pipe connectable to the through hole in the cap substrate. In one embodiment, the recess in the bottom of the cap substrate leaves the cap substrate at one side of the cap substrate, and a pipe may be connectable to this opening for supplying or receiving the fluid to/from the channel in the flow sensor.

In another embodiment of the present invention, the sensor chip of the flow sensor comprises a through hole through its substrate for guiding the fluid. This through hole may serve as a portion of the channel in the flow sensor. It may be desired to transport the fluid from the top side of the sensor chip to its bottom side through such through hole. In particular, this embodiment is preferred in manufacturing in that the substrate of the sensor chip is perforated anyway for preparing the vias. In the very same manufacturing step one or more additional through holes may be drilled or otherwise applied to the substrate and at lest one of these through holes will not be filled by conductive material and remains as a through hole for receiving the fluid later on in operation. The through holes in the sensor chip may be manufactured on wafer level such that the wafer is prepared with all through holes before it is separated into the individual sensor chips. In this respect it is preferred that the substrate of the sensor chip is provided including the circuitry and the sensing elements being integrated on wafer level. In a next step, the through holes are formed into the wafer for all sensor chips. The total number of through holes in this instance includes one or more through holes that will become vias, and one or more through holes that will be used for guiding the fluid.

In case a through hole in the sensor chip is provided for guiding the fluid and a cap substrate is attached to the sensor chip, it may be preferred that the channel in the cap substrate may be connected to the through hole in the sensor chip. The channel in the cap substrate may again be formed by a recess in its bottom crossing the sensing element. The recess in the bottom of the cap substrate may in one embodiment leave the cap substrate at its side. In another embodiment, the channel in the cap substrate may include a through hole in the cap substrate connected to a recess in the bottom which recess again may be connected to the through hole in the substrate of the sensor chip.

Irrespective of the presence of a cap substrate, it is preferred that a pipe is connected to the opening of the through hole in the bottom of the sensor chip for receiving fluid therefrom or for supplying fluid thereto. In case the sensor chip is attached to a carrier as described above, it may be preferred that the carrier has a through hole, too, which matches with the through hole in the sensor chip after assembly of the sensor chip to the carrier such that the fluid not only is guided through the sensor chip but also through the carrier. If needed, a seal may be applied to the interface of such through holes.

In any instance, it is not necessarily a pipe to be connected to the channel of the flow sensor, but it can be any other kind of connection piece that preferably provides for a fluid tight interface to the flow sensor.

In another embodiment, which is preferred for sensing the flow of a liquid, the liquid may be guided in a capillary. The capillary may be arranged in contact to the flow sensor, and specifically to the sensor chip of the flow sensor which in this embodiment preferably has a flat top surface such that the capillary as a channel for the liquid may be in contact with the top surface of the sensor chip. Here, the measurement may be taken through a wall of the capillary without the sensing element or the sensor chip being in direct contact with the fluid. Preferably, the capillary has a suitable thermal characteristic for allowing such indirect measurement.

Other advantageous embodiments are listed in the dependent claims as well as in the description below.

### Brief Description of the Drawings

Embodiments of the present invention, aspects and advantages will become apparent from the following detailed description thereof. Such description makes reference to the annexed drawings, wherein the figures show:
FIG. 1 a flow sensor according to an embodiment of the present invention, in diagram a) in a top view, in diagram b) in a longitudinal cut, and in diagram c) in a bottom view,
FIG. 2 a longitudinal cut of a flow sensor according to another embodiment of the present invention,
FIG. 3 two longitudinal cuts of a flow sensor according to an embodiment of the present invention,
FIG. 4 a longitudinal cut of a flow sensor according to an embodiment of the present invention,
FIG. 5 a longitudinal cut of a flow sensor according to an embodiment of the present invention,
FIG. 6 a longitudinal cut of a flow sensor according to an embodiment of the present invention,
FIG. 7 a cut of a flow sensor according to an embodiment of the present invention,
FIG. 8 a lateral cut of a flow sensor according to a further embodiment of the present invention,
FIG. 9 a longitudinal cut of a flow sensor according to a further embodiment of the present invention, and
FIG. 10 a longitudinal cut of a flow sensor according to a further embodiment of the present invention.

### Modes for Carrying Out the Invention

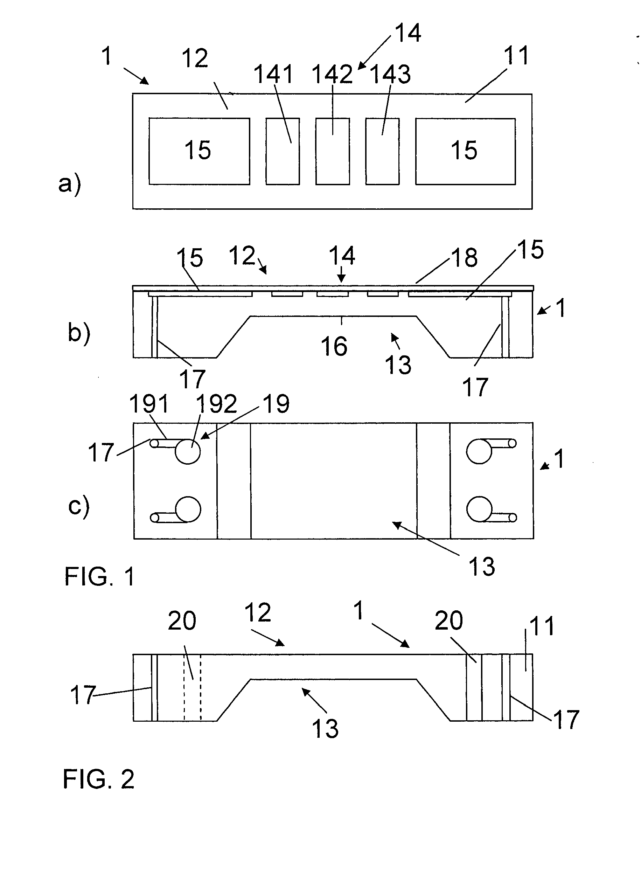

Figure 1 schematically illustrates a flow sensor with a sensor chip 1 according to an embodiment of the present invention. In diagram a) a view on the front side 12 of the sensor chip 1 is shown. The sensor chip 1 comprises a substrate 11 with an electronic circuitry 15 and a sensing element 14 for sensing a flow of a fluid. The sensing element 14 may comprise a heater 142, an upstream thermal sensor 141 and a downstream thermal sensor 143. As to the underlying measurement principle it is referred to the previous sections. The layout of the sensor chip 1 may vary and other arrangements may be envisaged. From the longitudinal cut of this sensor chip 1 in diagram 1b) it can be derived that the substrate 11 of the sensor chip 1 is thinned in a middle section such that the sensing element 14 is arranged on a membrane part 16 of the substrate 11. Given that the sensing element 14 preferably is thermo sensitive, a heat flow into the substrate 11 is not desired. The purpose of the membrane 16 is therefore to thermally isolate the sensing element 14 from the rest of the substrate 11 to some degree.

Vias 17 are provided in form of through holes leading through the substrate 11 from the front side 12 to the back side 13. The top surface of the sensor chip 1 is formed by a passivation layer 18 for protecting the electronic circuitry 15 and the sensing element 14. The passivation layer 18 is omitted in all following figures although it may be applied to any of these embodiments.

In diagram 1c), a bottom view of the sensor chip 1 is shown. The back side 13 of the substrate 11 carries an electrically conducting redistribution layer 19. The redistribution layer 19 comprises contact pads 192 for electrically contacting the sensor chip 1 from the outside, and conductors 191 connecting the contact pads 192 with ends of the vias 17.

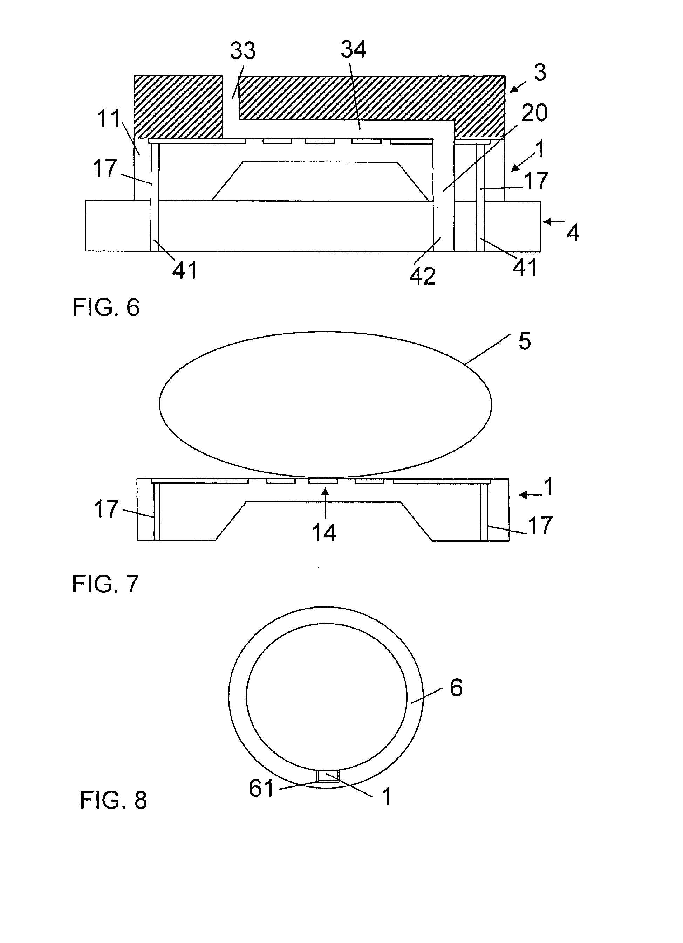

The top surface of the sensor chip 1 according to FIG. 1 is flat without major protrusions and as such suited for having the fluid pass the sensor chip 1 without the sensor chip 1 causing turbulences in the fluid. Hence, a flow sensor may contain such a sensor chip 1 directly arranged in a channel 6 for guiding the fluid such as is shown in FIG. 8. The channel 6 may contain a recess 61 in its wall the sensor chip 1 is embedded into with its top surface facing the fluid. The top surface of the sensor chip 1 and a surface of the inner wall of the channel at the location of measurement are essentially flat without protrusions or extensions disturbing the flow of the fluid in the channel 6.

FIG. 2 shows a flow sensor comprising a sensor chip 1 according to another embodiment of the present invention. While many elements are omitted in this schematic representation for serving a better illustration, the sensor chip 1 has at least one through hole 20 in the substrate 11 in addition to the vias 17. The through hole 20 serves as part of the channel in the flow sensor for guiding the fluid. Hence, by this means the fluid may be directed from the front side 12 of the sensor chip 1 to its back side 13 or vice versa. Hence, the sensor chip 1 may in addition serve at least partly as a channel for guiding the fluid.

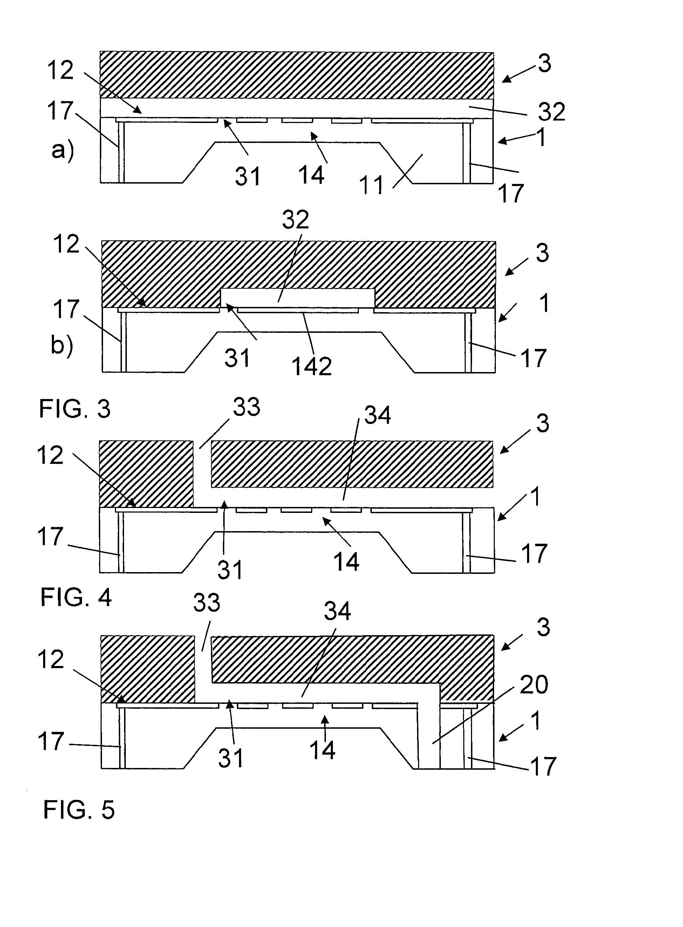

FIG. 3 shows another embodiment of a flow sensor. The flow sensor comprises a sensor chip 1 according to Figure 1. The sensor chip 1 is covered by a cap substrate 3 bonded to the front side 12 of the sensor chip 1. While Figure 3a) shows a longitudinal cut along a length of the flow sensor, FIG. 3b) shows a longitudinal cut along a width of the flow sensor. Hence, in the present example, the flow sensor is assumed to have a quadratic ground area. In the bottom 31 of the cap substrate 3 a recess is provided which recess together with the top surface of the sensor chip 1 forms a channel 32 for guiding the fluid, and in particular for making the fluid pass the sensing element 14. The channel 32 of the flow sensor leaves the cap substrate 3 at its sides, and specifically at opposite sides of the cap substrate 3. At these lateral openings in the cap substrate 3 fluid inlets and outlets, e.g. in form of pipes may be attached by means of connection pieces.

FIG. 4 shows another embodiment of a flow sensor in a longitudinal cut. The flow sensor again comprises a sensor chip 1 according to FIG. 1 and a cap substrate 3 which distinguishes from the cap substrate 3 of the embodiment in FIG. 3 in that the recess in the bottom 31 of the cap substrate 3 only represents a portion 34 of the channel. This portion 34 of the channel at one end leaves the cap substrate 3 at its side but on its other end is connected to a through hole 33 in the cap substrate 3. Hence, in this embodiment, an inlet or outlet pipe may be connected to the top of the cap substrate 3.

FIG. 5 shows another embodiment of a flow sensor in a longitudinal cut. The flow sensor again comprises a sensor chip 1 according to FIG. 1 and a cap substrate 3 which distinguishes from the cap substrate 3 from the embodiment of FIG. 4 in that the recess in the bottom 31 of the cap substrate 3 does not leave the cap substrate 3 at its sides at all but again is connected on the one hand to the through hole 33 in the cap substrate 3, and on the other hand to a through hole 20 in the sensor chip 1 which is described in more detail with respect to FIG. 2. Hence, the overall channel of the flow sensor includes two vertical elements, i.e. the through holes 33 and 20 in the cap substrate 3 and in the sensor chip 1, and a horizontal channel portion 34 built by the recess in the bottom 31 of the cap substrate 3 connecting these two through holes 33 and 20 which channel portion 34 leads the fluid across the sensing element 14.

FIG. 6 shows another embodiment of a flow sensor in a longitudinal cut. The flow sensor again comprises a sensor chip 1 according to FIG. 1 and the cap substrate 3 of FIG. 5. However, in this embodiment the sensor chip 1 is arranged on a carrier 4, possibly a printed circuit board, which may have vias 41 for connecting to the vias 17 of the sensor chip 1. Further, there may be a through hole 42 provided in the carrier 4, matching the through hole 20 of the sensor chip 2 for guiding the fluid through the carrier 4.

FIG. 7 shows another embodiment of a flow sensor in a cut. The flow sensor in a longitudinal cut again may comprise a sensor chip 1 according to FIG. 1. A channel structure 5 shown in a lateral cut may have an elliptical cross section and may be attached to the sensor chip 1, or the sensor chip 1 may be attached to the channel structure 5. Preferably, this flow sensor is used for sensing the flow of a liquid. The liquid is not in direct contact with the sensing element 14 but is separated from it by the wall of the channel structure 5. Still, in such embodiment the flow can be measured provided the wall of the channel structure 5 is of a suitable thermal conductivity.

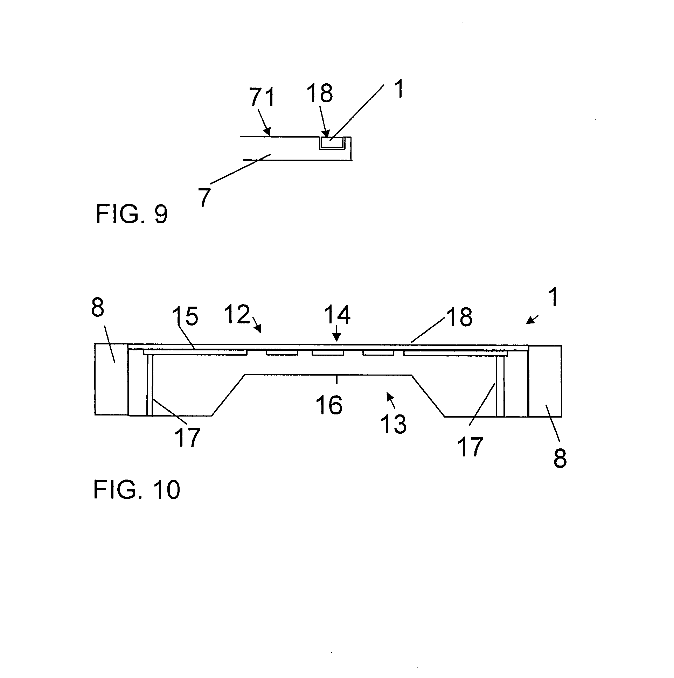

In the FIG. 9 a sensor chip 1 is arranged in a recess of a bar like support 7 reaching into a channel for guiding gas, for example. The gas may pass the flow sensor in a direction into the plane of projection. A top surface of the flow sensor including the top surface 18 of the sensor chip 1 and the top surface 71 of the support 7 - specifically the part that is not covered by the sensor chip 1 but surrounds the sensor chip and typically is exposed to the fluid, too - is flat and thus prevents from causing turbulences otherwise induced by uneven surfaces.

FIG. 10 shows a longitudinal cut of a flow sensor according to the embodiment of FIG. 1. However, a cast 8 is additionally provided to surround the sensor chip 1 for protection purposes. Hence, the flow sensor contains a packaged sensor chip 1. It is emphasized, that a top surface of such flow sensor defined by the top surface of the sensor chip 1 and the top surface of the cast 8 is rather flat and thus prevents from turbulences otherwise induced by uneven surfaces.

## Claims

1. Flow sensor comprising a sensor chip, wherein the sensor chip (1) comprises
- a substrate (11) with a front side (12) and a back side (13),
- a sensing element (14) arranged at the front side (12) for measuring the flow of a fluid,
- circuitry (15) arranged at the front side (12) and connected to the sensing element (14),
- contact pads (192) arranged at the back side (13), and
- one or more vias (17) extending through the substrate (11) for electrically connecting the circuitry (15) to the contact pads (192).

2. Flow sensor according to claim 1,
wherein the sensor chip (1) comprises a passivation layer (18) contributing to a top surface of the sensor chip (1) at its front side (12) which passivation layer (18) is inert to the fluid to pass.

3. Flow sensor according to claim 2,
wherein the circuitry (15) includes electronic circuitry for processing a signal of the flow sensor and for supplying a processed signal to the one or more vias (17).

4. Flow sensor according to claim 3,
wherein the passivation layer (18) extends over the entire top surface of the sensor chip (1) and covers the electronic circuitry (15) and the sensing element (14).

5. Flow sensor according to any one of the preceding claims 2 to 4,
wherein the passivation layer (18) comprises one of silicon oxide and silicon nitride.

6. Flow sensor according to any one of the preceding claims,
comprising a carrier (4) for the sensor chip (1),
wherein the contact pads (192) of the sensor chip (1) are electrically connected to contact pads of the carrier (4), and
wherein the flow sensor is free of wire bonds between the sensor chip (1) and the carrier (4) and free of a mould or a glob top.

7. Flow sensor according to any one of the preceding claims,
wherein a top surface of the sensor chip (1) carrying the sensing element (14) and a top surface of a support (7) for the sensor chip (1) contribute to a flat plane.

8. Flow sensor according to any one of the preceding claims,
wherein the sensor chip (1) comprises a through hole (20) through the substrate (11) for guiding the fluid.

9. Flow sensor according to any one of the preceding claims,
comprising a cap substrate (3) arranged at the front side (12) of the sensor chip (1),
wherein the cap substrate (3) comprises a channel (32) for guiding the fluid.

10. Flow sensor according to claim 9,
wherein the channel (32) in the cap substrate (3) is formed by a recess in a bottom (31) of the cap substrate (3) and by the top surface of the sensor chip (1) with the sensor element (14) facing the recess, and
wherein the channel (32) leaves the cap substrate (3) at two different sides.

11. Flow sensor according to claim 9,
wherein the channel (32) comprises a through hole (33) in the cap substrate (3) connected to a channel portion (34) formed by a recess in a bottom (31) of the cap substrate (3) and by the top surface of the sensor chip (1) with the sensor element (14) facing the recess or the through hole (33).

12. Flow sensor according to claim 11,
wherein the channel portion (34) in the cap substrate (3) leaves the cap substrate (3) at its side.

13. Flow sensor according to claim 8 in combination with claim 11,
wherein the channel portion (34) is connected to the through hole (20) in the substrate (11) of the sensor chip (1).

14. Flow sensor according to any one of the preceding claims,
comprising a channel (6) for guiding the fluid,
wherein the flow sensor is arranged in a wall (61) of the channel (6) facing the channel (6), and
wherein a top surface of the sensor chip (1) and an inner surface of the wall (61) form a flat surface.

15. Flow sensor according to any one of the preceding claims,
comprising a capillary (5) serving as a channel for guiding the fluid, and
wherein the sensor chip (1) is applied to an outside of the capillary (5).

16. Method for manufacturing a flow sensor according to claim 8, comprising
providing the substrate (11) of the sensor chip (1) of the flow sensor,
forming a total number of through holes into the substrate (11) of the sensor chip (1),
applying an electrically conducting material to a number of through holes less than the total number of through holes for building the vias (17), and
leaving at least one through hole (20) without applying the electrically conducting material for guiding the fluid through during operation.
